# EUROPEAN PATENT APPLICATION

(11) **EP 2 879 266 A1**
(43) Date of publication of application: **03.06.2015**
(21) Application number: 13194849.9
(22) Date of filing: 28.11.2013
(51) Int. Cl.: H02J 7/00, B60L 11/18

(54) **Power management method for a stacked cell rechargeable energy storage and stacked cell rechargeable energy storage device**

(71) Applicant: Dialog Semiconductor GmbH, 73230 Kirchheim (DE)
(72) Inventor: SCHLEIFER, Horst, 73230 Kirchheim/Teck-Nabern (DE); KNOEDGEN, Horst, 82110 Germering (DE)
(74) Representative: MERH-IP Matias Erny Reichl Hoffmann

(57) **Abstract**

A power management method for a stacked cell rechargeable energy storage comprises:
- monitoring state parameters of individual cells in the stacked cell rechargeable energy storage; and
- selectively connecting cells to a load according to the state parameter of the cells.

## Description

### Technical Field

This document relates to a method and device for power management of a stacked cell rechargeable energy storage device.

### Background

Stacked battery configurations are referred to as 2S (for 2 cells) or xS (for x cells respectively). Such configurations offer a reduction in charging time and current but require an increased stacked cell and affiliated charging voltage. If the stacked battery cells exhibit different charging levels, the overall charging level may be reduced and/or individual battery cells may be overcharged during the charging operation.

Typical application components as CPU and RAM require in general a supply voltage below 2V (e.g. 0.8V to 1.8V). There exist different approaches to transform a xS stacked cell voltage of typically around 30V to targeted application component operating voltages. Further, application components require in general different operating voltage levels for optimum performance under different operating conditions. It is a common approach to first transform the primary stacked battery voltage via a primary converter to a level that allows efficient conversion via a secondary converter according to the actual component requirements. While such primary converter could be realized with adequate efficiency for the case of limited step-down conversion ratios (e.g. as for a 10V to 3V converter), conversion efficiency gets problematic for increased step-down conversion ratios due to magnetic components and on-time depending switching losses.

There is thus a need to provide an improved power management method and a stacked cell rechargeable energy storage device which can supply different operating voltage levels and which can be charged in a fast and efficient way.

### Summary

According to an aspect, a power management method for a stacked cell rechargeable energy storage device is provided. The method comprises monitoring state parameters of individual cells in the stacked cell rechargeable energy storage. The cells may comprise battery or supercapacitor cells or any other charge storage means. Further, the method comprises selectively connecting or coupling cells to a load according to the monitored state parameters of the cells. The selectively connecting cells to a load may be further based on a given target voltage for the stacked cell rechargeable energy storage device. Therein, the cells may be constantly monitored, or the monitoring may be only performed for those cells currently connected to the load, wherein the state parameters of cells currently not connected to the load may be stored. Constant monitoring of a cell may comprise periodic determination of the state parameter of the cell, such as e.g. every second. Thus, the cells can be balanced during operation, wherein individual cells can be selectively discharged such that the stacked cell rechargeable energy storage is kept in a balanced state at all times. Therein, "balancing" may comprise that all cells have substantially the same charge deficit and/or substantially the same state of charge at any point in time.

Further, the selective connection of a subset of cells of the stacked cell device to the load, as described above, reduces the output voltage of the stacked cell device. Thus, the voltage conversion ratio between an output voltage of the stacked cell device and a desired input voltage of the load may be reduced. For a lower voltage conversion ratio, the conversion efficiency of a power converter increases, so that, for a suitably low conversion ratio, a single power converter may be sufficient to supply a stable input voltage at the desired level to the load.

According to embodiments, the measured state parameter may comprise at least one of a battery voltage of the cell, a charging level of the cell, and a deterioration level of cell. Thus, cells with a high charging level may be selectively discharged by connecting or coupling those cells to the load, so that the state of charge of individual cells in the stacked cell rechargeable energy storage can be balanced. During charging, roughly the same amount of charge may be supplied to each cell of the stacked cell energy storage, without the risk of overcharging some cells and not sufficiently (or not completely) charging other cells within a given charging time.

According to embodiments, the method may further comprise determining a number of necessary cells according to a predetermined input voltage of the load in order to obtain the predetermined input voltage from a connection in series of cells. In this case, the predetermined input voltage of the load may be used as the given target voltage for the stacked cell rechargeable energy storage device. Further, the method may comprise selecting cells, according to their respective state parameters, until the total number of selected cells is equal to the determined number. Therein, the cell selection may further be influenced by balancing requirements so that cells are selected while balancing the cell state parameters. The selected cells may then be connected to the load. The cells may be individually connectable to the load or in groups, wherein cells within a group may be connected in series. Thus, multiple different output voltage levels can be supplied by changing the number of cells connected to the load, and large step-down (or step-up) conversion rations between the voltage supplied by the stacked cell energy storage and any application components powered thereby can be avoided.

According to embodiments, the step of selectively connecting cells to the load may comprise selectively connecting individual cells to the load. As an example implementation, switches may be provided for each cell, so that selected cells may be connected to the load by operation of the associated switches. Thus, cell balancing can be performed for individual cells and it can be ensured that charge levels are uniform between cells. Further, it can be ensured that deteriorated cells are not (or only within required limitations) connected to the load, so that the overall performance of the stacked cell energy storage can be kept at a high level even if individual cells may malfunction or may have reduced performance.

According to embodiments, the step of selectively connecting cells to the load may comprise selectively connecting groups of cells to the load. A group may be defined as a series of a predetermined number of consecutive cells in the stacked cell device. Switching means may be provided such that a specific switch may connect a series of multiple cells (i.e. a group) to the load at the same time. Thus, cell balancing and the supply of different operating voltage levels can be achieved with the use of only a few switches for selectively connecting and disconnecting whole groups of cells at a time.

According to embodiments, the step of monitoring the state parameter may comprise identifying cells with a high battery voltage and/or with a high charging level compared to other cells of the stacked cell rechargeable energy storage. The step of selectively connecting cells to the load may comprise selectively connecting the identified cells to the load by operating switches which connect the identified cells, or which connect a group of cells comprising the identified cells, to the load. Additionally, cells with a particularly low battery voltage and/or a low charging level may be identified and may be marked or flagged so that these cells are not connected to the load until the stacked cell energy storage has been sufficiently charged again.

Preferably, the switches have a low on resistance to reduce loss at the switching elements. Many different types of switches are suitable for connecting cells with a load, e.g. solid state switches, switches controlled via transformers, switches controlled via level shifters by means of capacitors or transformers, etc. The switches may further be used for battery protection and be part of a battery protection means which ensures that no excessive current is drawn from the stacked cell rechargeable energy storage device and/or individual cells.

According to embodiments, the step of selectively connecting one or more cells to the load may further comprise dynamically disconnecting one or more cells which are connected to the load if the battery voltage and/or charging level of the connected one or more cells drops below the battery voltage and/or charging level of at least one cell not connected to the load. The at least one cell may then be connected to the load. Thus, the battery voltage and/or the charging level of the cells may be balanced even during the supply of power to a load due to the dynamic re-selection of cells. Therein, the timing of cell disconnection and connection procedures may be negotiated with electronic component(s) of the load device, in order to ensure stable power availability according to the needs of the load device. For example, the electronic component(s) of the load device may communicate times of peak activity to the stacked cell device, so that any switching of cells can be avoided during peak activity times and performed during times of lower power requirement of the electronic components. Further, the electronic components may communicate voltage requirements to the stacked cell device, so that the total number of cells connected at any point in time may be adjusted according to the voltage requirements of the electronic components of the load device.

According to embodiments, the cells in the stacked cell rechargeable energy storage may be connected in series to a charging circuit. Thus, charging of the stacked cell rechargeable energy storage can be performed efficiently by applying a fairly high charging voltage across the series of stacked cells.

According to embodiments, during charging of the stacked cell rechargeable energy storage, different charge current values may selectively be provided to individual cells according to the respective state parameter of the individual cells in order to balance the charging level across multiple cells of the stacked cell rechargeable energy storage. Thus, overcharging of individual cells can be prevented while ensuring that cells with a lower charging level (according to the specific maxima) may be charged with a higher current, which ensures complete usage of the charge up capability for the stacked cell energy storage. The balancing during the charging process thus ensures that substantially all cells have an optimum state of charge at any point in time, wherein e.g. most or even substantially all cells may have a similar state of charge at any point in time. Thus, if the charging process is ended before the stacked cell rechargeable energy storage is fully charged, the cells are already balanced to meet further charging and/or discharging requirements in an optimized way.

According to embodiments, switchable auxiliary loads, such as e.g. resistive loads or transistors operated as loads, may be provided in parallel to individual cells of the stacked cell rechargeable energy storage. The auxiliary loads may be switched according to the state parameters of the associated cells. During charging, the charging current of a cell may be reduced by switching its associated auxiliary load in parallel to the cell. According to embodiments, an auxiliary load may be substituted by a power management converter connecting or coupling individual cells to an external load. Further, the switches for connecting the cells with the load may be used as switchable auxiliary loads. The state of charge of the cells can thus be balanced during the charging process, by lowering the charging current for selected cells which have auxiliary loads switched in parallel, so that cells which may have a larger charge deficit may be fully charged without overcharging cells with a lower charge deficit.

During discharging, if cells are connected to the load in groups, the switchable (resistive) auxiliary loads may further be used to balance the charging levels of cells within a group. For selected one or more cells in the group, the auxiliary loads may be switched parallel to the one or more cells, thus inducing a partial discharge of the cell across the load. Thus, if switching means are provided such that the whole group can be connected to the load without the possibility to selectively connect and disconnect individual cells in the group, the cells within the group may be balanced by using the switchable auxiliary loads.

According to a further aspect, a stacked cell rechargeable energy storage device is provided comprising a plurality of stacked cells and a power management means. The cells may comprise battery or supercapacitor cells or any other charge storage device. The power management means comprise a cell monitoring subsystem for monitoring state parameters of individual cells in the stacked cell rechargeable energy storage. Further, a plurality of switches is provided for selectively connecting or coupling cells to a load. A discharge controlling means is adapted to selectively connect cells to the load according to the state parameter of the cells by controlling the switches. Thus, using simple and robust components, the stacked cell rechargeable energy storage device may provide a balanced charging and/or discharging operation of its individual cells. This increases the device's effectiveness and longevity.

According to embodiments, the state parameter may comprise at least one of a battery voltage of the cell, a charging level of the cell, and a deterioration level of the cell.

According to embodiments, a plurality of switchable auxiliary loads, such as e.g. resistive loads, which are connectable in parallel to individual cells, may be provided. A charge controlling means may selectively connect, during charging, the switchable loads in parallel to the cells according to the state parameter of the cells in order to balance a charging level across multiple cells of the stacked cell rechargeable energy storage. Alternatively, the switchable auxiliary loads may be implemented as converters that dissipate some power e.g. via the display backlight while the display is e.g. black or showing some informational sites. Thus, the charge controlling means can directly control the charge current applied to each cell and can thus achieve a cell balancing during charging by controlling the amount of charge injected into each cell per time unit.

According to embodiments, the discharge controlling means may further be adapted to control the switches so that multiple loads can be connected to multiple sets of cells. Therein, each respective set of cells may supply a different output voltage to its respective load. Thus, e.g. a load with a high voltage requirement, such as a display backlight, may be connected to a large number of cells or to the complete stack so that the output voltage of the stacked cell device closely corresponds to the voltage requirement of the high voltage load. Another load, such as e.g. an application processor, may be connected to a smaller number of cells in order to avoid a high step-down conversion ratio between the output of the stacked cell device and the input of the low voltage load.

According to embodiments, the discharge controlling means may further be adapted to communicate with the load, and to control the plurality of switches according to energy requirements of the load. Thus, the load may e.g. communicate its load requirements for certain points in time, and the discharge controlling means may e.g. perform dynamic disconnection and reconnection of individual cells during times of low load activity, such that an optimum power supply providing a stable output voltage can be ensured during peak activity periods of the load.

According to a further aspect, a power management system may be provided, comprising a stacked cell rechargeable energy storage device as described above. At least one power converter may be provided, the input side of which may be selectively connected to selected cells of the stacked cell rechargeable energy storage device. The output side of the power converter may be connected directly to at least one load and may supply the input voltage for the load. Thus, in the power management system, efficient single step power converters may perform the voltage conversion between the stacked cell energy storage device and the at least one load, as the voltage supplied by the selected cells of the stacked cell energy storage device can be adjusted such that the voltage conversion that is necessary to deliver the desired voltage for a particular load can be performed by a single, stabilized power converter without the need for high step-down conversion ratios.

According to a further aspect, a software program is described. The software program may be adapted for execution on a processor and for performing the method steps outlined in the present document when carried out on the processor.

According to another aspect, a storage medium is described. The storage medium may comprise a software program adapted for execution on a processor and for performing the method steps outlined in the present document when carried out on the processor.

According to a further aspect, a computer program product is described. The computer program may comprise executable instructions for performing the method steps outlined in the present document when executed on a computer.

It should be noted that the methods and systems including its preferred embodiments as outlined in the present document may be used stand-alone or in combination with the other methods and systems disclosed in this document. In addition, the features outlined in the context of a system are also applicable to a corresponding method. Furthermore, all aspects of the methods and systems outlined in the present document may be arbitrarily combined. In particular, the features of the claims may be combined with one another in an arbitrary manner.

The present description is mainly directed at embodiments of a method. However, it is to be understood, that any features described in terms of method steps may also be implemented as device features and vice versa.

In the present document, the term "couple" or "coupled" refers to elements being in electrical communication with each other, whether directly connected e.g., via wires, or in some other manner.

### Short description of the Figures

Various aspects are explained below in an exemplary manner with reference to the accompanying drawings, wherein:
Fig. 1 shows a schematic illustration of an embodiment of a power management device;
Fig. 2 shows a further embodiment of a stacked cell rechargeable energy storage;
Fig. 3 shows a schematic illustration of an embodiment of a power management system; and
Fig. 4 shows a flow diagram of an embodiment of a power management method.

### Detailed description

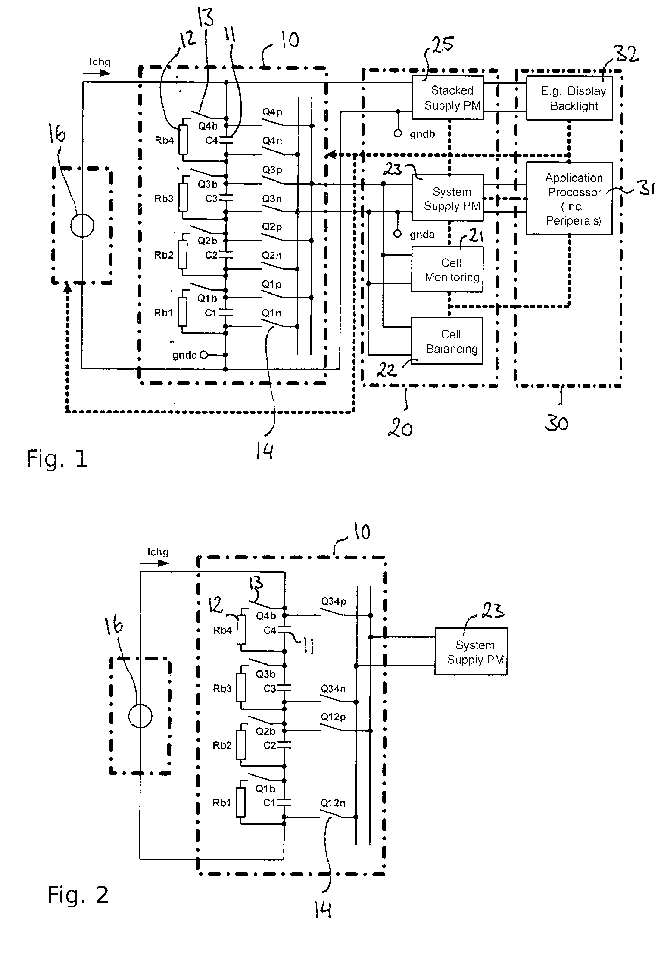

Fig. 1 shows a stacked cell rechargeable energy storage device 10 together with associated management circuitry 20 for supplying power to an electronic device 30. In Fig. 1, electrical connections are denoted by solid lines and communication/information paths are denoted by dashed lines.

The stacked cell rechargeable energy storage device 10 comprises a serial stack of cells 11, wherein the cells 11 may be battery cells, supercapacitors or other charge storage devices. Therein, the cell capacitances C1-C4 and/or the cell voltages may be identical for all cells 11, or different cells 11 may have different respective cell capacitances C1-C4 and/or cell voltages. In general, a stacked cell rechargeable energy storage device 10 provides a higher voltage than a single battery, e.g. a voltage of 30V instead of typically around 5V for a single cell. The number of cells 11 in the stacked cell rechargeable energy storage device 10 may range from 2 to about 10 cells for an example Li-Ion stacked cell. For a stacked cell including supercapacitors or other charge storage technologies, the number could be significantly higher. A stack of a number of "subcells" might be considered as a single cell.

Resistors 12 may be connectable in parallel with the cells 11, wherein switches 13 may be provided so that, for each individual cell 11, the corresponding parallel resistor (or load) 12 may be selectively switched on or off. Alternately, parallel transistor switches may be used as combination of switches 13 and loads 12. Further switches 14 may be provided for selectively connecting cells 11, or groups of cells 11, to an external load. The cells 11 may have a common ground potential, gndc. An external charger 16 may be provided for charging the cells 11. The external charger 16 may be a mains-powered charging device, a USB charger or any other power supply.

The power management circuitry 20 may comprise a cell monitoring means 21 for monitoring a state parameter of individual cells 11. The state parameter may e.g. comprise an output voltage, a charging level or a parameter related to a level of deterioration of the monitored cells 11. Further, a cell balancing means 22 may be provided for controlling the switches 14 such that cells 11 can be selectively connected or disconnected from e.g. a system supply power management means 23 for supplying power to one or more loads, e.g. an application processor 31 and/or to peripheral equipment of the electronic device 30. The selection of cells 11 may be performed according to the state parameter determined by the cell monitoring means 21. The cell balancing means 22 may comprise means to provide a load to selected cells for the purpose of balancing. The cell balancing means may further control the switches 13 to connect auxiliary loads (e.g. resistors) to cells.

Thus, if e.g. the cell voltage or the state of charge is monitored, the cells 11 may be balanced during discharging such that all cells 11 have a substantially similar charging level at any one time. In order to achieve this effect, the cells 11 having the highest cell voltage and/or the cell voltage closest to a maximum voltage for the cells 11 in its fully charged state, are connected to the load 31 and thus selectively discharged. If, during the discharging of the connected cells 11 the cell monitoring means 21 determines that a cell 11 which is currently connected to the load 31 has a higher charge deficit than a cell 11 which is not currently connected to the load 31, the cell balancing means 22 may dynamically operate the switches 14 to ensure that the cells 11 with the lowest charge deficit are connected to the load 31.

Further, if a stacked cell rechargeable energy storage device 10 is used as a power supply to a low voltage load, the output voltage of the stacked cell rechargeable energy storage device 10 is generally converted down, e.g. by a Buck downconverter which is operated at a high frequency of e.g. 1 MHz. If the step-down conversion ratio is fairly high, such as e.g. 10:1, the high frequency downconversion is generally inefficient due to switching losses and other effects. Thus, according to some embodiments, the number of cells 11 and/or the type of cells 11 may be selected according to a desired supply voltage. Thus, the need for a voltage conversion between the voltage provided by the cell stack and the desired supply voltage of the application 24 may be eliminated or reduced. If the voltage provided by the stacked cell device 10 is sufficiently close to the voltage required by a load device 31, 32, the necessary voltage conversion may be performed using a single power converter which may operate at an efficient conversion ratio and which may supply a stable input voltage to the load device 31, 32.

As shown in Fig. 1, during charging, the cells 11 are connected in series with the external charger 16. For a stack of N cells 11, this results in an increased charging voltage of Vchg=N*Vcell. The charge current supplied to each cell may be controlled by the cell balancing means 22 according to the charging level of the cells as determined by the cell monitoring means 21. In order to selectively reduce the charge current supplied to a particular cell 11, the respective switch QNb may be closed and the resistor RbN may thus be connected in parallel to the cell 11. Thus, the charge current may be selectively reduced for those cells 11 which have a low charge deficit, while cells 11 with a high charge deficit may be supplied with a higher charge current, thus reducing the overall charging time of the stacked cell rechargeable energy storage device 10.

With the charging method as described above, wherein the cells 11 are charged in series, a significant reduction of the charging time tchg can be achieved in case of current limited charging circuitry, as tchg=tchg_par/Ncell (with tchg_par being the charging time for parallel switched cells that form a single cell), such that the charging time for the cells connected in series is reduced by a factor of Ncell compared to cells connected in parallel.

Some components of the electronic device 30, such as e.g. a display backlight 32 which requires a high input voltage, may be managed by a separate stacked supply power management device 25 which ensures that device 25 is connected to a large number of cells 11, such as e.g. all of the cells 11.

The dynamic cell selection, as described above, may increase the affiliated converter's efficiency. Further, a dynamically changing ground reference of the respective circuitry with each cell selection may occur (i.e. relative to the dynamically changing ground reference of the other application circuitry and optionally relative to the ground reference of the stack of cells 11). For the power management means 23, 25, respective ground potentials gnda, gndb may be provided depending on the state of the switches 14. Hereby the maximum difference in ground reference for selection of different subsets of cells 11 from the stacked cell device 10 is Vrdiff=(Ncell-1)*Vcell, wherein Ncell is the total number of cells 11 within the stacked cell device 10.

In the embodiment shown in Fig. 1, the operation principle is to charge the battery/supercapacitor cells 11 as a series circuitry and discharge (via operation of the powered device) only a selection of the total number of cells 11 at a time. Hereby the selected cells 11 (including their number) may be changed dynamically (and not necessarily in fixed order) in accordance with the cell states and application operation requirements to ensure a balanced discharging of the cells 11. This has the effects of permanent readiness for balanced charging, availability of sufficient power (where one single cell might no longer source enough power), as well as minimized cell selection switching losses. For the switches, gate drive circuitry with dynamically changing gnd reference may be employed, and the switches may be realized as MOS switches or as micro-mechanical components.

The supply power management means of the power management circuitry 20 may interact with the application processor 31 of the electronic device 30, as shown by the communication/information paths in Fig. 1. Thus, the components of the electronic device 30 may negotiate the times of cell selection changes, as the power availability may be limited during cell disconnection and connection of different cells 11. If cell disconnection and connection is performed primarily during times of low power requirements of the respective electronic device component 31, 32, the performance of the electronic device 30 can be ensured even if the stacked cell rechargeable energy storage device 10 performs dynamic switching of the cells 11.

It should be noted that, in the embodiment of Fig. 1, the series of battery/supercapacitor cells 11 is not interrupted by switches, so that the overall resistance and affiliated losses of the series of stacked cells can be kept to a minimum.

Fig. 2 shows another embodiment, wherein the number of cell selection switches 14 is reduced compared to the embodiment of Fig. 1. In the embodiment of Fig. 2, cell monitoring may be performed in a similar fashion as in the embodiment of Fig. 1, but the arrangement of switches 14 allows selectively connecting and disconnecting groups of cells 11, instead of individual cells 11, to the system supply power management means 23. However, with the switchable resistive loads 12 provided for each individual cell, charge balancing within a group of cells 11 in this embodiment may be achieved by controlled discharging of individual cells 11 via their associated resistor (or load) 12 until the charging level of cells 11 within a group is balanced.

Due to the increased charging currents, cell balancing by e.g. switchable resistive loads in parallel to the cells (as shown in Fig. 1 and 2) may result in power dissipation during the charging operation. According to some embodiments, the balancing of the cells may primarily be achieved during the discharging operation (discharge cell balancing). If charge balancing is performed during the charging operation, the cell charging current may be reduced due to current flow in the system supply power management 23, the stacked supply power management 25, the cell balancing block 22 and the switchable resistive loads 12.

A communication link between the system supply power management 23 (or any other circuitry acting in its purpose) and the charger 16 (see dashed lines in Fig. 2) allows setting of the required charge current levels to optimize complete cell charging and balancing.

According to some embodiments, the cell monitoring circuitry 21 may be operated such that it monitors the cell charging levels and/or cell voltages only for connected cells 11. These determined cell parameters may be stored and the stored values may be referenced during times at which the respective cells 11 are not connected to the load 31, 32. Cell balancing circuitry 22 may be connected to the selected cells at the same time. Alternatively, cell monitoring and cell balancing may be performed constantly, such as e.g. periodically every second or at other suitable time intervals, for all cells, in order to gain information even about cells 11 which are not currently connected to the power consuming application circuitry 31, 32. In this case, multiplexing switches may be required for connecting the cell monitoring circuitry 21 to cells 11 which are not currently selected and which are thus not currently connected to the management circuitry 20 by the respective switches 14.

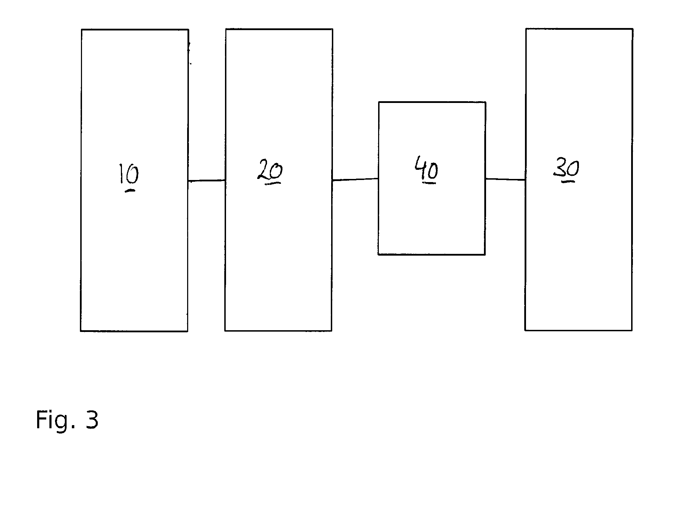

As shown in Fig. 3, in a schematic illustration of a power management system according to an embodiment, the stacked cell energy storage 10 may be connected, via its associated management circuitry 20, to a power converter 40. The output side of the power converter 40 may be connected to the load 30. The voltage output by the stacked cell device 10 may be adjusted by the management circuitry 20 such that the total number of connected cells is equal to a predetermined number of cells for supplying a desired input voltage to the power converter 40 and thereby to the load 30. The predetermined number of cells may be selected according to a desired input voltage of the load 30, so that the voltage conversion ratio of the power converter 40 has a predetermined value for e.g. maximum efficiency, such as e.g. 10V to 3V. Thus, with the output voltage of the stacked cell device 10 being adjustable due to the selection of a specific number of cells by the management circuitry 20, a single stage power converter 40 may be sufficient to supply a stabilized voltage supply to the load 30. With the selection of a smaller number of cells, the output voltage of the stacked cell device 10 may be reduced sufficiently so that the power converter 40 may be operated with a fairly low voltage conversion ratio.

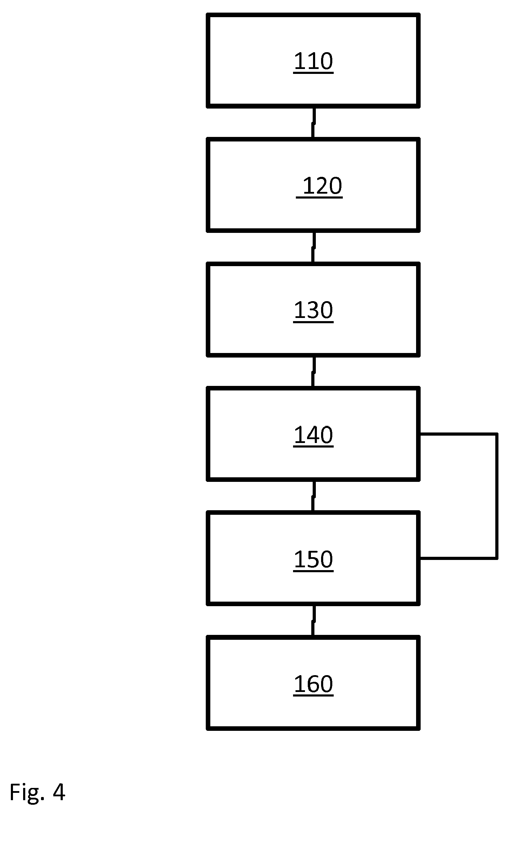

As shown in Fig. 4, a method 100 according to an embodiment may start with the step 110 of monitoring state parameters of cells in a stacked cell device 10. Therein, the monitored cell parameters may comprise a battery voltage of the cell, a charging state of the cell, and a deterioration level of the cell. In subsequent step 120, requirements of a load 30, which is to be connected to the stacked cell device 10, may be determined. Therein, a desired input voltage of the load 30 may be determined. Additionally, further characteristics of the load 30, such as e.g. any requirements regarding the stability of the input voltage to the load 30 or allowed switching times, may be identified.

In step 130, a necessary number of cells may be determined for supplying the desired input voltage of the load. Therein, the total voltage supplied by the determined number of cells may be equal to the desired input voltage of the load, or it may have a predetermined relationship to the desired input voltage of the load, such as e.g. being higher than the desired input voltage of the load by a predetermined factor. In step 140, the determined number of cells may be selected and connected to the load 30. Therein, the selected cells may be determined according to a predetermined criterion, such as e.g. identifying the cells with the highest battery voltages or with the highest charging levels.

In subsequent step 150, further monitoring of cells in the stacked cell device 10 may be performed, wherein it may be determined whether the cells currently connected to the load 30 still fulfill the predetermined criterion, or whether e.g. a cell connected to the load 30 has been discharged such that its battery voltage is now lower than the battery voltage of a cell not currently connected to the load. If a cell currently connected to the load no longer fulfills the predetermined criterion, the processing may return to step 140, wherein different cells may be selected according to the predetermined criterion and connected to the load. During the disconnection and reconnection of cells, any further characteristics of the load, as determined in step 120, may be taken into account. Thus, disconnection of cells may be disabled during peak power requirements of the load 30, or the load 30 may communicate preferred time slots for performing cell disconnection and reconnection. When the load 30 does not require any further power (step 160), all cells are disconnected from the load 30 and the method ends.

The above-described method achieves cell charge balancing during discharge and charging operation without reduction in overall efficiency of the stacked cell device. If cell monitoring is performed for cells connected to the load, no additional multiplexers for cell monitoring are required.

With the method and device as described above, no primary converter with high step-down ratio is required (as e.g. a system buck converter). This results in a reduction of external components and in increased conversion efficiency. For the cell selection switches, the efficiency reduction is primarily due to static on-resistance, which can be kept to a minimum.

The number of cells connected to the stacked and system power management means 23, 25 might be adjusted dynamically e.g. depending on the charging level (and on the resulting cell voltages).

According to some embodiments, the goal of the selective discharging of individual cells need not be a balancing of the stacked cell device. Instead, some cells may be deliberately discharged completely, e.g. cells which are about to be replaced by a user at the next opportunity. Thus, defective cells, which may no longer reach an adequate charging level or which may show other signs of aging, may be completely discharged, and a user may be alerted to replace the respective cells in order to restore the full functionality of the stacked cell energy storage. Alternatively a user may be able to replace a single or selection of cells against charged-up ones.

The various embodiments of the present method and device enable a stacked cell rechargeable energy storage device to be operated such that the charging level of the cells is balanced at all times, and such that output voltages are supplied which are close to the supply voltages required by components of an electronic device that is powered by the energy storage device. Therein, the cell balancing and the output voltage adaptation may be performed by selectively connecting individual cells or groups of cells to the load. Further cell balancing may be performed during charging by switching resistive loads in parallel with individual cells in order to selectively reduce the charging current for those cells.

It should be noted that the description and drawings merely illustrate the principles of the proposed methods and devices. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Power management method for a stacked cell rechargeable energy storage, comprising:
- monitoring state parameters of individual cells in the stacked cell rechargeable energy storage; and
- selectively connecting cells to a load according to the state parameters of the cells.

2. Power management method according to claim 1, wherein the state parameter of a cell comprises one of a battery voltage of the cell, a charging level of the cell, and a deterioration level of cell.

3. Power management method according to any one of claims 1 or 2, wherein the selectively connecting cells to a load is further based on a given target voltage for the stacked cell rechargeable energy storage device.

4. Power management method according to any one of claims 1 to 3, further comprising:
- determining a necessary number of cells according to a predetermined input voltage of the load;
- selecting the determined number of cells; and
- connecting the selected cells to the load.

5. Power management method according to any one of claims 1 to 4, wherein the step of selectively connecting cells to the load comprises selectively connecting individual cells or groups of cells to the load.

6. Power management method according to any one of claims 1 to 5, wherein the step of monitoring state parameters comprises identifying cells with a high battery voltage and/or with a high charging level compared to other cells of the stacked cell rechargeable energy storage, and wherein the step of selectively connecting cells to the load comprises selectively connecting the identified cells to the load in order to balance the charging level of cells across the stacked cell rechargeable energy storage.

7. Power management method according to claim 6, wherein the step of selectively connecting cells to the load further comprises dynamically disconnecting at least one cell which is connected to the load if the battery voltage and/or charging level of the connected cell drops below the battery voltage and/or charging level of at least one cell not connected to the load, and connecting the at least one cell to the load.

8. Power management method according to any one of claims 1 to 7, wherein the cells in the stacked cell rechargeable energy storage are connected in series to a charging circuit and are connectable individually or in groups to the load, wherein cells within a group are connected in series.

9. Power management method according to any one of claims 1 to 8, further comprising:
- during charging of the stacked cell rechargeable energy storage, selectively providing different charge current values to individual cells according to the state parameter of the cells in order to balance the charging level across multiple cells of the stacked cell rechargeable energy storage.

10. Power management method according to any one of claims 1 to 9, further comprising:
- providing switchable loads in parallel to at least one cell of the stacked cell rechargeable energy storage; and
- switching the loads according to the state parameter of the at least one cell.

11. Stacked cell rechargeable energy storage device, comprising:
- a plurality of stacked cells;
- a cell monitoring subsystem for monitoring a state parameter of individual cells in the stacked cell rechargeable energy storage;
- a plurality of switches for selectively connecting cells to a load; and
- a discharge controlling means for selectively connecting cells to the load according to the state parameter of the cells by controlling the switches.

12. Stacked cell rechargeable energy storage device according to claim 11, further comprising:
- a plurality of switchable loads which are connectable in parallel to individual cells; and
- a charge controlling means for selectively connecting the switchable loads in parallel to the cells according to the state parameter of the cells in order to balance a charging level across multiple cells of the stacked cell rechargeable energy storage.

13. Stacked cell rechargeable energy storage device according to claim 11 or 12, wherein the discharge controlling means are further adapted to control the switches so that multiple loads are connected to multiple sets of cells.

14. Stacked cell rechargeable energy storage device according to any one of claims 11 to 13, wherein the discharge controlling means are further adapted to:
- communicate with the load; and
- control the plurality of switches according to the energy requirements of the load.

15. Power management system, comprising:
- a stacked cell rechargeable energy storage device according to any one of claims 11-14,
- a power converter, the input side of which is connected to the selected cells of the stacked cell rechargeable energy storage device, and the output side of which is connected to the load and supplies the input voltage for the load.
